# EUROPEAN PATENT APPLICATION

(11) **EP 1 903 486 A1**
(43) Date of publication of application: **26.03.2008**
(21) Application number: 07253304.5
(22) Date of filing: 21.08.2007
(51) Int. Cl.: G06Q 10/00

(54) **Instruction-wielding apparatus and method of presenting instructions thereon**

(30) Priority: 21.08.2006 US 507698
(71) Applicant: Belkin International Inc., Compton, CA 90220 (US)
(72) Inventor: Hoard, David W., Escondido, California 92025 (US)
(74) Representative: Lawrence, John

(57) **Abstract**

An instruction-wielding apparatus (1000, 3000) comprises two or more interaction points (1100), an instruction-holding mechanism (1200, 3200), and one or more on-product instruction cards (1300) capable of being supported by the instruction-holding mechanism. At least a first one of the on-product instruction cards (1310, 2310, 3310, 4310) comprises two or more instruction steps (1311) and two or more instruction pointers (1312). When the instruction-holding mechanism supports the first one of the on-product instruction cards, a first one of the instruction pointers (13121) points to a first physical location (1111) of a first one of the interaction points (1110), and correlates it to a first one of the instruction steps (13111). At the same time, a second one of the instruction pointers (13122) points to a second physical location (1121) of a second one of the interaction points (1120), and correlates it to a second one of the instruction steps (13112).

## Description

### FIELD OF THE INVENTION

This invention relates generally to mechanical and/or electronic devices, and relates more particularly to instruction methods for mechanical and/or electronic devices.

### BACKGROUND OF THE INVENTION

Electrical and mechanical devices often include sets of instructions aimed at guiding a user through different tasks, such as set up, installation, and troubleshooting. These instructions are for the most part provided on separate sheets along with the device, and are oftentimes text-based or pictorial in nature. This technique for providing instructions, however, is not ideal. For example, in the case of text in the instructions, a user has to read the instruction sheet and attempt to correlate the text, which may be vague, with a specific part of the electrical and/or mechanical device to which the instruction references. As a further example, in the case of pictorial instructions, the user still has to correlate details in pictures or drawings, which may be unclear and not to scale, with a part of the electrical and/or mechanical device with which the user needs to interact. In both of these examples, the instructions fail to directly and unambiguously point the user to a location on the electrical and/or mechanical device that needs his attention. Accordingly, there exists a need for an improved apparatus and method to provide instructions for electrical and/or mechanical devices.

### BRIEF DESCRIPTION OF THE DRAWINGS

The invention will be better understood from a reading of the following detailed description, taken in conjunction with the accompanying figures in the drawings in which:
**FIG. 1** illustrates an instruction-wielding apparatus in accordance with an embodiment of the invention;
**FIG. 2** illustrates a multi-card sheet capable of being displayed on the instruction-wielding apparatus of FIG. 1, in accordance with an embodiment of the invention;
**FIG. 3** illustrates an instruction-wielding apparatus, which is a different embodiment of instruction-wielding apparatus of FIG. 1, in accordance with an embodiment of the invention;
**FIG. 4** illustrates an instruction booklet capable of being displayed on the instruction-wielding apparatus of FIG. 1, in accordance with an embodiment of the invention;
**FIG. 5** illustrates an instruction-wielding apparatus, which is a different but related embodiment of instruction-wielding apparatus of FIG. 1, in accordance with an embodiment of the invention;
**FIG. 6.** illustrates a flowchart of a method for providing instructions to users of an instruction-wielding apparatus, in accordance with an embodiment of the invention;
**FIG. 7.** illustrates a flowchart of a method for pointing a user following instructions on an instruction-wielding apparatus to interaction points on the instruction-wielding apparatus, in accordance with an embodiment of the invention;
**FIG. 8.** illustrates a flowchart of a method for providing instructions to users of an instruction-wielding apparatus, in accordance with an embodiment of the invention; and
**FIG. 9.** illustrates a flowchart of a method for following instructions on an instruction-wielding apparatus, in accordance with an embodiment of the invention.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical, mechanical, or other manner.

### DETAILED DESCRIPTION OF THE DRAWINGS

In one embodiment, an instruction-wielding apparatus comprises two or more interaction points, an instruction-holding mechanism, and one or more on-product instruction cards capable of being supported by the instruction-holding mechanism. At least a first one of the on-product instruction cards comprises two or more instruction steps and two or more instruction pointers. When the first one of the on-product instruction cards is supported by the instruction-holding mechanism, a first one of the instruction pointers points to a first physical location of a first one of the interaction points on the instruction-wielding apparatus, and also correlates the first physical location to a first one of the instruction steps adjacent to the first instruction pointer. At the same time, a second one of the instruction pointers points to a second physical location of a second one of the interaction points on the instruction-wielding apparatus, and also correlates the second physical location to a second one of the instruction steps adjacent to the second instruction pointer.

In some embodiments, an instruction-wielding apparatus, includes: (a) two or more interaction points; (b) an electronic display mechanism; and (c) one or more on-product electronic guides, at least a first one of which includes: (1) two or more instruction steps; (2) a first instruction pointer that, when the first one of the one or more on-product electronic guides is displayed by the electronic display mechanism: (i) points to a first physical location of a first one of the two or more interaction points on the instruction-wielding apparatus; and (ii) correlates the first physical location to a first one of the two or more instruction steps adjacent to the first instruction pointer; and (3) a second instruction pointer that, when the first one of the one or more on-product electronic guides is displayed by the electronic display mechanism: (i) points to a second physical location of a second one of the two or more interaction points on the instruction-wielding apparatus; and (ii) correlates the second physical location to a second one of the two or more instruction steps adjacent to the second instruction pointer.

In some examples, the instruction-wielding apparatus is selected from the group consisting essentially of: (a) a network router; (b) a network switch; and (c) a modem.

In the same or different examples, the two or more interaction points are selected from the group consisting essentially of: (a) a power plug; (b) a modem connection port; (c) a network element connection port; and (d) one or more status lights.

In various examples, the electronic display mechanism comprises an LCD. In many examples, the two or more instruction steps provide setup advice. In the same or different examples, the two or more instruction steps provide troubleshooting advice.

In many examples, a second one of the one or more on-product electronic guides provides instructions in a non-English language; and the first one of the one or more on-product electronic guides provides the instructions in English. In the same or different examples, each of the one or more on-product electronic guides provides the instructions in a different language.

Yet another embodiment teaches a method of presenting instructions on an instruction-wielding apparatus. The method includes: (a) providing the instruction-wielding apparatus having two or more interaction points and an electronic display mechanism; (b) providing one or more on-product electronic guides having two or more instruction steps and two or more instruction pointers; and (c) presenting, when the first one of the one or more on-product electronic guides is displayed by the electronic display mechanism: (1) a first one of the two or more instruction pointers: (i) pointing to a first physical location of a first one of the two or more interaction points on the instruction-wielding apparatus; and (ii) correlating the first physical location to a first one of the two or more instruction steps adjacent to the first one of the two or more instruction pointers; and (2) a second one of the two or more instruction pointers: (i) pointing to a second physical location of a second one of the two or more interaction points on the instruction-wielding apparatus; and (ii) correlating the second physical location to a second one of the two or more instruction steps adjacent to the second one of the two or more instruction pointers.

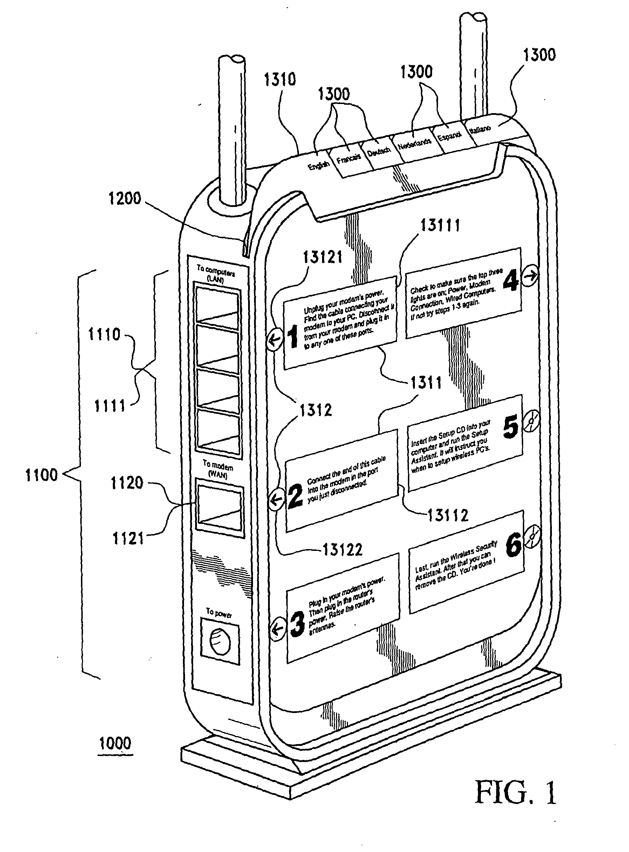

Referring now to the figures, FIG. 1 illustrates an instruction-wielding apparatus 1000. Instruction-wielding apparatus 1000 can be any kind of mechanical and/or electronic device that is normally accompanied by instructions to assist users in interacting with it. Instruction-wielding apparatus 1000 can represent, for example, a network router, a network switch, a modem, a computer, a printer, and a monitor. Outside of the computer realm, instruction-wielding apparatus 1000 can also represent, for example, a DVD player, a Digital Video Recording (DVR) device, a television set, a stereo device, and a device requiring a number of cabled connections.

Instruction-wielding apparatus 1000 includes at least two or more interaction points 1100, such as a first interaction point 1110 and a second interaction point 1120. First interaction point 1110 is a physical element of instruction-wielding apparatus 1000, and is located at a first physical location 1111 on instruction-wielding apparatus 1000. As illustrated by first interaction point 1110, individual interaction points 1100 can comprise more than one related physical elements or ports. Likewise, second interaction point 1120 is a physical element of instruction-wielding apparatus 1000, and is located at a second physical location 1121 on instruction-wielding apparatus 1000.

Interaction points 1100 can be accessible to users following instructions while interacting with instruction-wielding apparatus 1000. For instance, interaction points 1100 can be used to support connections onto, and to display status information about, instruction-wielding apparatus 1000. As an example, interaction points 1100 can be one or more power cord ports or power plugs, power cords, modem connection ports, network element connection ports, and status lights. In one embodiment, modem connection ports and network element connection ports can be Universal Serial Bus (USB) ports, Ethernet RJ-45 jacks, and/or telephone RJ-10 or RJ-14 jacks. In the same or a different embodiment, status lights can be power indicators, modem connection indicators, wireless computer activity indicators, and/or wired computer activity indicators.

Instruction-wielding apparatus 1000 further comprises an instruction-holding mechanism 1200, which is capable of supporting and displaying one or more on-product instruction cards 1300 on instruction-wielding apparatus 1000. Instruction-holding mechanism 1200 can be external or internal to instruction-wielding apparatus 1000. In one embodiment, instruction-holding mechanism 1200 comprises a pocket into which on-product instruction cards 1300 can be inserted on a side of instruction-wielding apparatus 1000. In another embodiment, instruction-holding mechanism 1200 comprises a compartment door capable of being opened to place on-product instruction cards 1300 inside a compartment on a side of instruction-wielding apparatus 1000. In another embodiment, instruction-holding mechanism 1200 comprises a set of external rails capable of guiding and holding on-product instruction cards 1300 as they are slid-in on a side of instruction-wielding apparatus 1000. In another embodiment, instruction-holding mechanism 1200 comprises a set of external tabs capable holding on-product instruction cards 1300 when placed on a side of instruction-wielding apparatus 1000. In some embodiments, instruction-holding mechanism 1200 is translucent, or otherwise comprises cut-outs, to display on-product instruction cards 1300 in a usable manner as they are held by instruction-holding mechanism 1200. In other words, one or more of on-product instruction cards 1300 can be read and otherwise used by a user of instruction-wielding apparatus 1000 while on-product instruction cards 1300 remain supported by instruction-holding mechanism 1200.

On-product instruction cards 1300 can take the place of normal instructions provided by manufacturers for products similar to instruction-wielding apparatus 1000, and can also be presented as quick advice guides. In one example, advice provided by on-product instruction cards 1300 comprises setup advice to assist users in setting up instruction-wielding apparatus 1000. In the same or another example, advice provided by on-product instruction cards 1300 comprises troubleshooting advice to assist users in troubleshooting instruction-wielding apparatus 1000. In the same or another example, one of on-product instruction cards 1300 provides instructions in a non-English language, and another one of on-product instruction cards 1300 provides the same instructions in English. In the same or another example, each one of on-product instruction cards 1300 provides the same instructions in different languages. In the same or another example, each different combination, of languages and instructions, is provided on different ones of on-product instruction cards 1300.

On-product instruction cards 1300 includes a first on-product instruction card 1310, which comprises and presents two or more instruction steps 1311, such as a first instruction step 13111 and a second instruction step 13112. Instruction steps 1311 can be adjacent to two or more instruction pointers 1312, such as a first instruction pointer 13121 and a second instruction pointer 13122. Under "active circumstances" when instruction-holding mechanism 1200 supports and displays first on-product instruction card 1310, instruction pointers 1312 are positioned to direct users to corresponding interaction points 1100 on instruction-wielding apparatus 1000. This technique assists users in correlating interaction points 1100 to instruction steps 1311 while following instructions on first on-product instruction card 1310.

As a result, under the described "active circumstances," first instruction pointer 13121 can point to first physical location 1111 of first interaction point 1110 on instruction-wielding apparatus 1000, and can simultaneously correlate first physical location 1111 of first interaction point 1110 to first instruction step 13111 located adjacent to first instruction pointer 13121.

Similarly, under the same "active circumstances," second instruction pointer 13122 can point to second physical location 1121 of second interaction point 1120 on instruction-wielding apparatus 1000, and can simultaneously correlate second physical location 1121 of second interaction point 1120 to second instruction step 13112 located adjacent to second instruction pointer 13122.

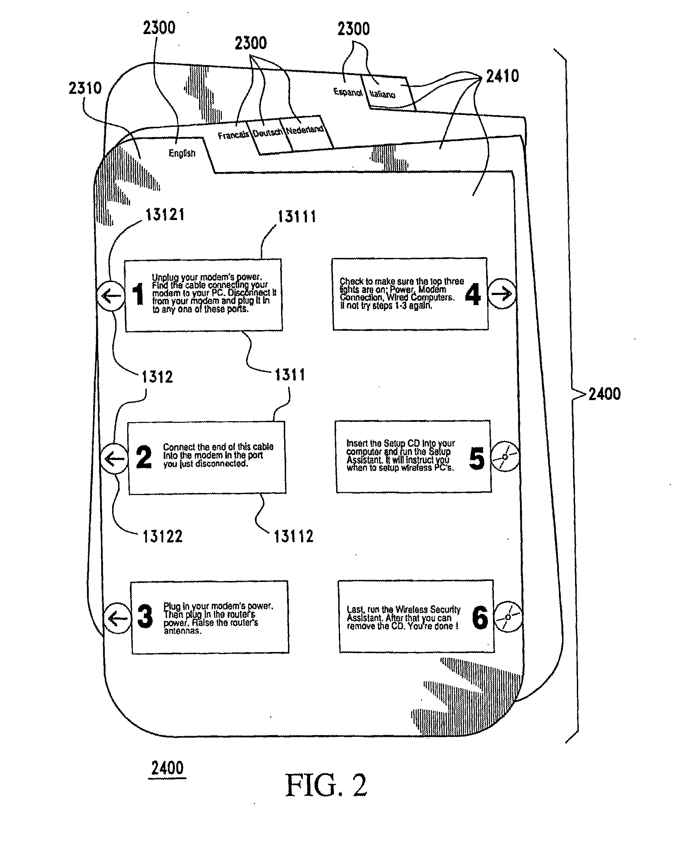

**FIG. 2** illustrates a first one of one or more multi-card sheets 2400 capable of being displayed on instruction-wielding apparatus 1000 of FIG. 1. The first one of multi-card sheets 2400 contains one or more on-product instruction cards 2300, which can be a different embodiment of on-product instruction cards 1300 of FIG 1. On-product instruction cards 2300 differ from on-product instruction cards 1300 in that they are contained on at least first one of multi-card sheets 2400, rather than being provided in a loose-leaf fashion as was the case in FIG. 1. On-product instruction cards 2300 includes a first on-product instruction card 2310. The first one of multi-card sheets 2400 is capable of being supported by instruction-holding mechanism 1200 (FIG. 1), such that at least first on-product instruction card 2310 is capable of being displayed on instruction-wielding apparatus 1000 in a manner similar to the display of first on-product instruction card 1310 (FIG. 1). The first one of multi-card sheets 2400 is also removable from instruction-holding mechanism 1200 (FIG. 1). In the same or a different embodiment, instruction-holding mechanism 1200 can support more than one of multi-card sheets 2400 at a time.

The first on-product instruction card 2310 is functionally similar to first on-product instruction card 1310 (FIG. 1) in terms of advising users interacting with instruction-wielding apparatus 1000, and also in terms of the type of instructions and languages in which the instructions are provided. As a result, under "active circumstances" when instruction-holding mechanism 1200 supports the first one of multi-card sheets 2400, instruction-holding mechanism 1200 can display first on-product instruction card 2310, which can assist users in correlating interaction points 1100 (FIG. 1) to instruction steps 1311 (FIG. 1), and vice versa. In some embodiments, the first one of multi-card sheets 2400 can be accordion-folded, and thus divided, to form folded sections 2410. In the same or a different embodiment, each one of on-product instruction cards 2300 can be presented on separate folded sections 2410. In the same or a different embodiment, each one of the on-product instruction cards 2300 are presented in a different language on separate folded sections 2410.

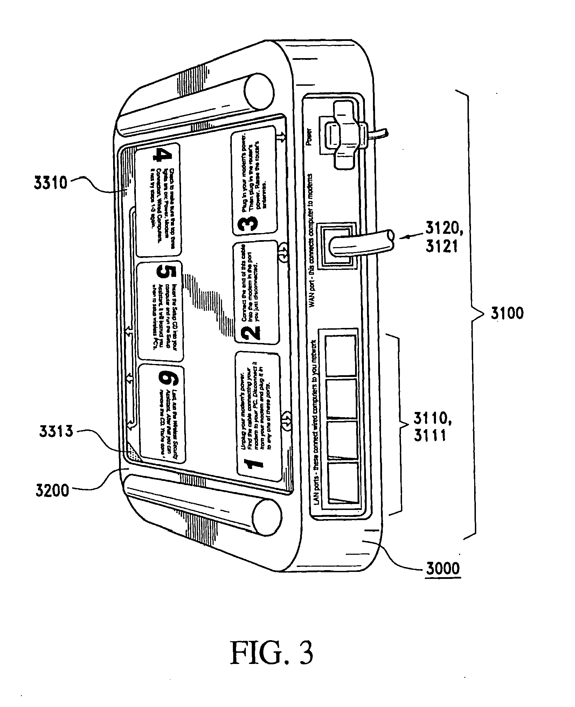

**FIG. 3** illustrates an instruction-wielding apparatus 3000, which is a different embodiment of instruction-wielding apparatus 1000 of FIG. 1. Instruction-wielding apparatus 3000 comprises an instruction-holding mechanism 3200 having at least a first one of one or more on-product instruction cards 3310 and also comprises interaction points 3100. Interaction points 3100 can be similar to interaction points 1100 in FIG. 1, and the first on-product instruction card 3310 in FIG. 3 is functionally similar to first on-product instruction card 1310 (FIG. 1) in terms of advising users interacting with instruction-wielding apparatus 3000, and also in terms of the type of instructions and languages in which the instructions are provided. Accordingly, the first on-product instruction card 3310 has instruction steps 3311 and instruction pointers 3312, which are similar to instruction steps 1311 and instruction pointers 1312, respectively, in FIG. 1. As a result, under "active circumstances" when instruction-holding mechanism 3200 in FIG. 3 supports and displays the first on-product instruction card 3310, the first on-product instruction card 3310 assists users in correlating interaction points 3100 to instruction steps 3311, and vice versa.

The first on-product instruction card 3310 differs from first on-product instruction card 1310 (FIG. 1) in that it further comprises on its backside a sticker 3313, which is capable of adhering to instruction-holding mechanism 3200 of instruction-wielding apparatus 3000. In some embodiments, instruction-holding mechanism 3200 comprises a smooth surface of instruction-wielding apparatus 3000. In these embodiments, instruction-holding mechanism 3200 supports the first on-product instruction card 3310 by serving as a plane to which sticker 3313 adheres. In the same or a different embodiment, sticker 3313 can be removable from and re-applied to instruction-holding mechanism 3200. As an example, sticker 3313 may comprise a static-cling mechanism capable of adhering to instruction-holding mechanism 3200.

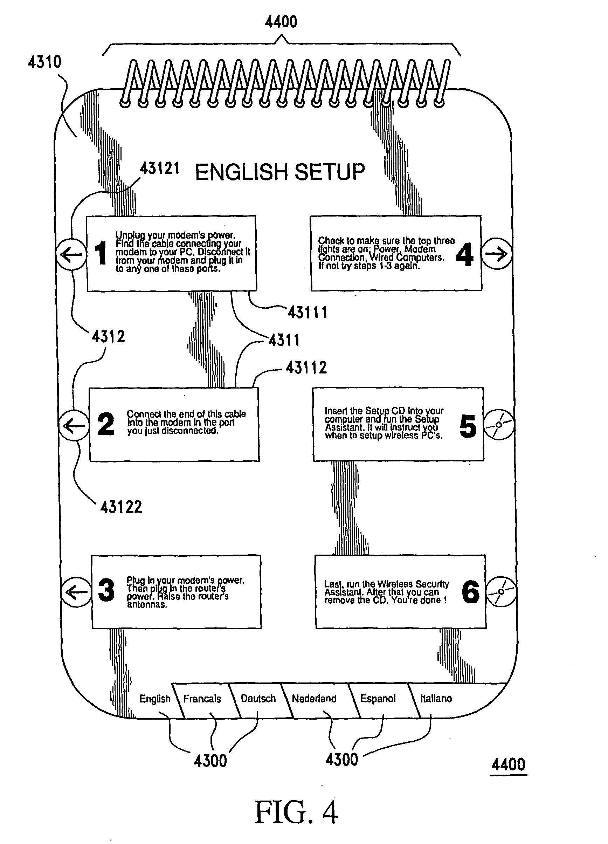

**FIG. 4** illustrates an instruction booklet 4400. Instruction booklet 4400 contains one or more on-product instruction cards 4300, which is a different embodiment of on-product instruction cards 1300 of FIG 1. On-product instruction cards 4300 differ from on-product instruction cards 1300 in that they are contained in instruction booklet 4400, rather than being provided in a loose-leaf fashion as was the case in FIG. 1.

Instruction booklet 4400 is capable of being supported by instruction holding mechanism 1200 (FIG. 1), such that at least a first on-product instruction card 4310, like first on-product instruction card 1310 (FIG. 1), is capable of being displayed on instruction-wielding apparatus 1000. Instruction booklet 4400 is also removable from instruction-holding mechanism 1200 (FIG. 1).

In addition, first on-product instruction card 4310 is functionally similar to first on-product instruction card 1310 in FIG 1 in terms of advising users interacting with instruction-wielding apparatus 1000, and in terms of the type of instructions and languages in which the instructions are provided. Accordingly, first on-product instruction card 4310 has instruction steps 4311 and instruction pointers 4312, which are similar to instruction steps 1311 and instruction pointers 1312, respectively, in FIG. 1. As a result, under "active circumstances" when instruction-holding mechanism 1200 (FIG. 1) supports instruction 400 and displays first on-product instruction cards 4310, first on-product instruction card 4310 can assist users in correlating interaction points 1100 (FIG. 1) to instruction steps 4311, and vice versa.

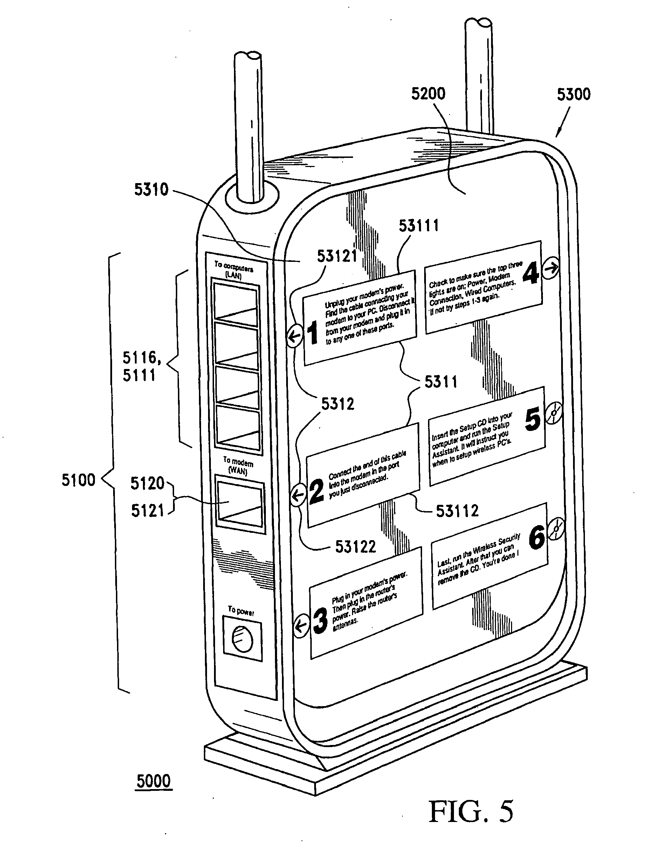

**FIG. 5** illustrates an instruction-wielding apparatus 5000, which is a different but related embodiment of instruction-wielding apparatus 1000 of FIG. 1. Instruction-wielding apparatus 5000 differs from instruction-wielding apparatus 1000 in that it comprises an electronic display mechanism 5200 instead of instruction-holding mechanism 1200 (FIG. 1). Nevertheless, both electronic display mechanism 5200 and instruction-holding mechanism 1200 serve equivalent functions of displaying a medium on which instructions are presented to users. In one example, electronic display mechanism 5200 comprises a Liquid Crystal Display (LCD).

In addition, instruction-wielding apparatus 5000 differs from instruction-wielding apparatus 1000 in that it comprises one or more on-product electronic guides 5300 instead of on-product instruction cards 1300 (FIG. 1). Again, nevertheless, both on-product electronic guides 5300 and on-product instruction cards 1300 serve equivalent functions of being the medium upon which instructions are presented to users. In all other respects, instruction-wielding apparatus 5000 can be equivalent to instruction-wielding apparatus 1000. Accordingly, instruction-wielding apparatus 5000 can have interaction points 5100, similar to interaction points 1100 in FIG. 1, and on-product electronic guides 5300 can have instruction steps 5311 and instruction pointers 5312, similar to instruction steps 1311 and instruction pointers 1312 in FIG. 1.

Therefore, on-product electronic guides 5300, including a first on-product electronic guide 5310, are capable of being displayed by electronic display mechanism 5200. First on-product electronic guide 5310 is functionally similar to first on-product instruction card 1310 as described for FIG 1 in terms of advising users interacting with instruction-wielding apparatus 5000, and in terms of the type of instructions and languages in which the instructions are provided. As a result, when displayed by electronic display mechanism 5200, first on-product electronic guide 5310 assists users in correlating interaction points 5100 to instruction steps 5311, and vice versa.

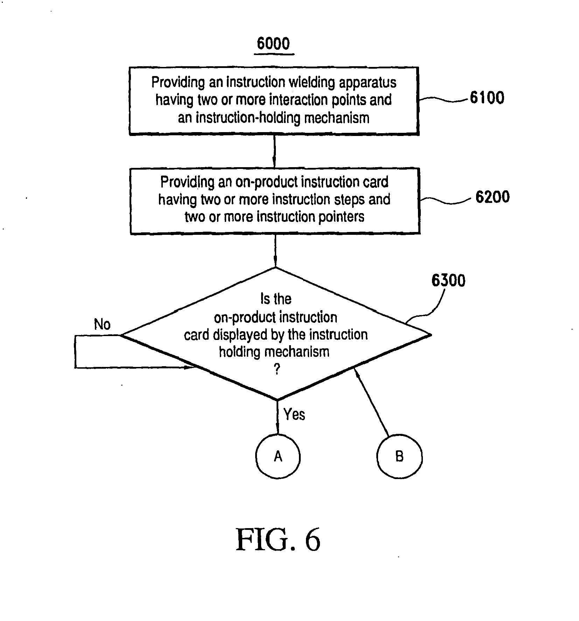

**FIG. 6.** illustrates a flowchart of a method 6000 for providing instructions to users of an instruction-wielding apparatus.

A step 6100 of method 6000 in FIG. 6 involves providing a user with an instruction-wielding apparatus having two or more interaction points and an instruction-holding mechanism. The instruction-wielding apparatus in step 6100 can be any kind of electric and/or mechanical device that is capable of guiding the user through instructions, displayed on the instruction-wielding apparatus itself, by literally pointing the user to appropriate interaction points that correspond to the current instruction step that the user is carrying out. The interaction points may encompass any physical features or elements of the instruction-wielding apparatus with which the user would have to interact while carrying out instructions. The instructions are themselves designed to be supported on a surface of the instruction-wielding apparatus via the instruction-holding mechanism.

As an example, the instruction-wielding apparatus in step 6100 can be instruction-wielding apparatus 1000 of FIG. 1, or instruction-wielding apparatus 3000 of FIG. 3. In the same or a different example, the interaction points in step 6100 can be the interaction points 1100 (FIG. 1) or 3100 (FIG. 3). In the same or a different example, the instruction-holding mechanism in step 6100 can be instruction-holding mechanism 1200 on FIG. 1, or instruction-holding mechanism 3200 on FIG. 3.

A step 6200 of method 6000 in FIG. 6 involves providing the user with at least a first one of on-product instruction cards having two or more instruction steps and two or more instruction pointers. The instruction pointers can correspond to the instruction steps, and can be capable of pointing the user to the interaction points discussed in step 6100.

As an example, the first one of the on-product instruction cards can be similar to first on-product instruction card 1310 on FIG. 1, to first on-product instruction card 2310 on FIG. 2, to the first on-product instruction card 3310 on FIG. 3, and to first on-product instruction card 4310 on FIG. 4. In the same or a different example, the instruction steps can be instruction steps 1311 (FIGs. 1 or 2), 3311 (FIG. 3), or 4311 (FIG. 4). In the same or a different example, the instruction pointers can be the instruction pointers 1312 (FIGs. 1 or 2), 3312 (FIG. 3), or 4312 (FIG. 4). In the same or a different example, steps 6100 and 6200 of method 6000 can be subparts of a single step, or their sequence can be reversed.

Returning to FIG. 6, a decision step 6300 of method 6000 involves establishing whether the first one of the on-product instruction cards is currently being supported by the instruction-holding mechanism such that it is displayed on the instruction-wielding apparatus.

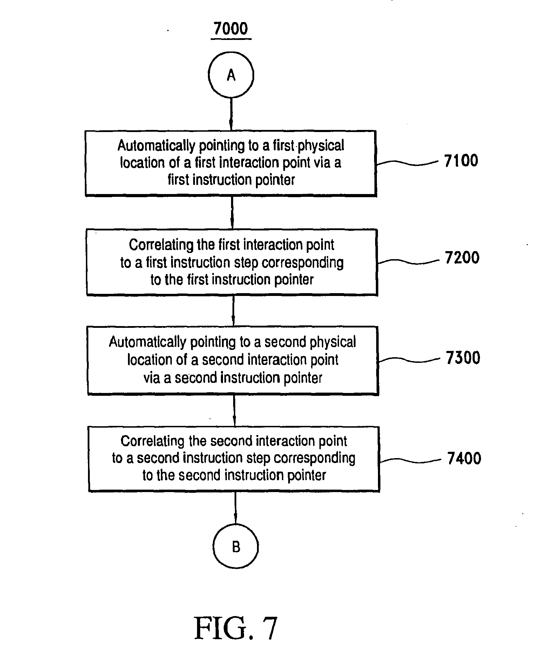

If the first one of the on-product instruction cards is not currently being supported by the instruction-holding mechanism, such that it is not displayed on the instruction-wielding apparatus, then the instruction pointers are not capable of guiding the user by pointing to the interaction points as discussed in step 6200, and decision step 6300 repeats. If, instead, the first one of the on-product instruction cards is currently being supported by the instruction-holding mechanism, such that it is displayed on the instruction-wielding apparatus, then method 6000 continues on through path "A," which continues method 6000 as a method 7000, as shown hereinafter in FIG. 7. Path "B" will be described later.

**FIG. 7.** illustrates a flowchart of a method 7000 for pointing a user following instructions on an instruction-wielding apparatus to two or more interaction points on the instruction-wielding apparatus.

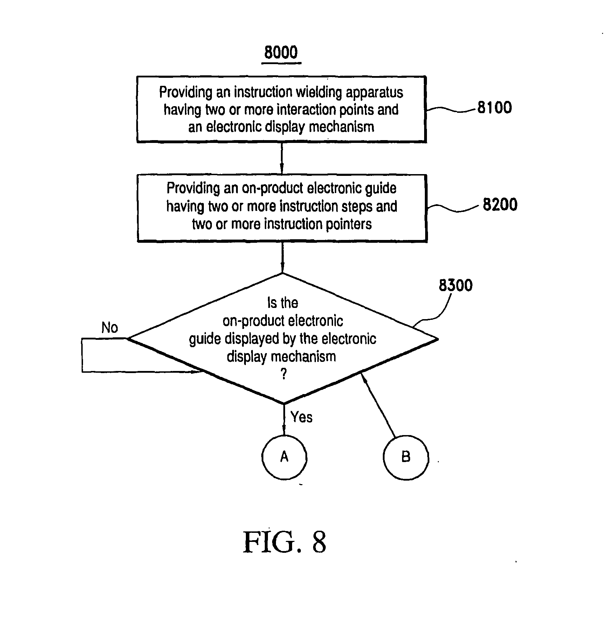

A step 7100 of method 7000 in FIG. 7 is reached through path "A" from FIG. 6 or, as hereinafter described, from FIG. 8. Step 7100 involves automatically pointing, via a first one of two or more instruction pointers, to a first physical location of a first one of two or more interaction points on the instruction-wielding apparatus. The instruction pointers are presented such that they point to their corresponding interaction points on the instruction-wielding apparatus whenever the instructions are displayed on the instruction-wielding apparatus.

As an example, the instruction-wielding apparatus can be similar to instruction-wielding apparatus 1000 in FIG. 1, instruction-wielding apparatus 3000 in FIG. 3, or instruction-wielding apparatus 5000 in FIG. 5. In the same or a different example, the interaction points in step 7100 can be the interaction points 1100 (FIG. 1) or 3100 (FIG. 3) or 5100 (FIG. 5). In the same or a different example, the instruction pointers can be similar to instruction pointers 1312 (FIGs. 1 or 2), 3312 (FIG. 3), 4312 (FIG. 4), or 5312 (FIG. 5). Finally, the first physical location, of the first one of the interaction points on the instruction-wielding apparatus, encompasses a location or place on the instruction-wielding apparatus where the first one of the interaction points is located. In the same or a different example, the first physical location of the first one of the interaction points can be similar to first physical location 1111 in FIG. 1, of the first physical locations on instruction-wielding apparatus 3000 (FIG. 3) or 5000 (FIG. 5).

Returning to FIG. 7, a step 7200 of method 7000 involves correlating the first one of the interaction points to a first one of two or more instruction steps that correspond to the first one of instruction pointers. As an example, the instruction steps can be similar to instruction steps 1311 (FIGs. 1 or 2), 3311 (FIG. 3), 4311 (FIG. 4), or 5311 (FIG. 5). The correlation in step 7200 can be accomplished when the instructions are displayed on the instruction-wielding apparatus. Under those circumstances, the first one of instruction pointers is located adjacent to the first one of the instruction steps and points to the first physical location, as described in step 7100, thereby linking the first one of the instruction steps and the first physical location.

Continuing with method 7000 in FIG. 7, a step 7300 involves automatically pointing, via a second one of the instruction pointers, to a second physical location of a second one of the interaction points on the instruction-wielding apparatus. Step 7300 is equivalent in function and operation to step 7100, except that it applies instead to the second one of instruction pointers and to the second physical location of the interaction points. As a result, all descriptions of the operation of step 7100 can be extrapolated to describe step 7200.

Finally, a step 7400 of method 7000 in FIG. 7 involves correlating the second one of interaction points to a second one of the instruction steps corresponding to the second one of instruction pointers. Step 7400 is equivalent in function and operation to step 7200, except that it applies instead to the second one of the interaction points, to the second one of the instruction steps, and to the second one of the instruction pointers. As a result, all descriptions of the operation of step 7200 can be extrapolated to describe step 7400.

In one embodiment, steps 7100, 7200, 7300, and 7400 can be subparts of a single step, or their sequence can be otherwise changed. Upon completion of all four steps, method 7000 exits through path "B," which proceeds to step 6300 in method 6000 on FIG. 6.

**FIG. 8.** illustrates a flowchart of a method 8000 for providing instructions to users of an instruction-wielding apparatus.

A step 8100 of method 8000 in FIG. 8 involves providing a user with an instruction-wielding apparatus having two or more interaction points and an electronic display mechanism.

Step 8100 is procedurally similar to step 6100 of method 6000, in FIG. 6. As a result, the interaction points, can be comprised as described in step 6100 of method 6000. The difference is that, whereas the instruction-wielding apparatus of method 6000 comprises an instruction-holding mechanism, the instruction-wielding apparatus of method 8000 comprises the electronic-display mechanism, instead. As an example, the electronic-display mechanism can be similar to electronic display mechanism 5200 in instruction-wielding apparatus 5000, as described in FIG. 5.

Returning to FIG. 8, a step 8200 of method 8000 involves providing the user with at least a first one of or more on-product electronic guides having two or more instruction steps and two or more instruction pointers. The instruction pointers can correspond to the instruction steps, and can be capable of pointing the user to the interaction points discussed in step 8100.

Step 8200 is procedurally similar to step 6200 of method 6000, in FIG. 6. As a result, the instruction steps and the instruction pointers can be comprised as described as in step 6200 of method 6000. The main difference is that, whereas the instruction-wielding apparatus of method 6000 comprises on-product instruction cards, the instruction-wielding apparatus of method 8000 comprises on-product electronic guides instead. As an example, the on-product electronic guides can be similar to on-product electronic guides 5300, as described for FIG. 5. In the same or a different example, steps 8100 and 8200 in FIG. 8 can be subparts of a single step, or their sequence can be reversed.

Next, a decision step 8300 of method 8000 is procedurally similar to step 6300 of method 6000, in FIG. 6. Step 8300 involves establishing whether the first one of the on-product electronic guides is currently being displayed by the electronic display mechanism on the instruction-wielding apparatus. Step 8300 can also be reached through path "B" from method 7000 in FIG. 7.

If the first one of the on-product electronic guides is not currently being displayed by the instruction-holding mechanism on the instruction-wielding apparatus, then the instruction pointers are not capable of guiding the user by pointing to the interaction points, and decision step 8300 is repeated. If, instead, the first one of the on-product electronic guides is currently being displayed by the electronic display on the instruction-wielding apparatus, then method 6000 continues on through path "A", which continues method 8000 as a method 7000, as shown in FIG. 7.

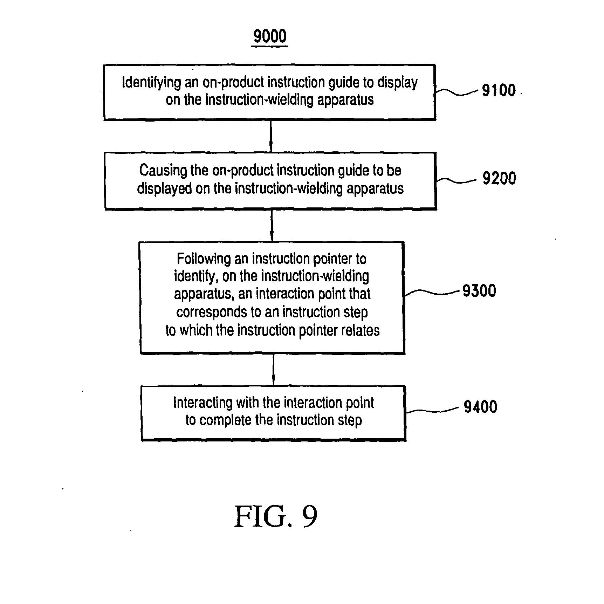

**FIG. 9.** illustrates a flowchart of a method 9000 for following instructions on an instruction-wielding apparatus.

A step 9100 of method 9000 in FIG. 9 involves identifying an on-product instruction guide to display on the instruction-wielding apparatus. In one example, a user can identify or select the on-product instruction guide he needs based on a task he is trying to accomplish with the instruction-wielding apparatus.

As an example, the task the user is trying to accomplish can be related to setup advice or troubleshooting advice, as described for on-product instruction cards 1300 in FIG. 1. In the same or a different example, the on-product instruction guide in step 9100 can be similar to first on-product instruction card 1310 on FIG. 1, to the first on-product instruction card 2310 on FIG. 2, to the first on-product instruction card 3310 on FIG. 3, to the first on-product instruction card 4310 on FIG. 4, or to first on-product electronic guide 5310 on FIG. 5. In the same or a different example, the instruction-wielding apparatus in step 9100 can be instruction-wielding apparatus 1000 of FIG. 1, instruction-wielding apparatus 3000 of FIG. 3, and instruction-wielding apparatus 5000 of FIG. 5.

Returning to FIG. 9, a step 9200 of method 9000 involves causing the on-product instruction guide to be displayed on the instruction-wielding apparatus. As an example, the user can cause the on-product instruction guide from step 9200 to be displayed on the instruction-wielding apparatus via an instruction-displaying mechanism, such as instruction-holding mechanism 1200 in FIG. 1, instruction-holding mechanism 3200 in FIG. 3, or electronic display mechanism 5200 in FIG. 5.

Continuing method 9000 in FIG. 9, a step 9300 comprises following an instruction pointer to identify, on the instruction-wielding apparatus, an interaction point that corresponds to an instruction step to which the instruction pointer relates.

As an example, the user can follow the instruction pointer, such as one of instruction pointers 1312 (FIG. 1), 3312 (FIG. 3), 4312 (FIG. 4), or 5312 (FIG. 5), to find the physical location on the instruction-wielding apparatus the interaction point that corresponds to the instruction pointer. In the same or a different example, the instruction step can be similar to one of instruction steps 1311 (FIGs. 1 or 2), 3311 (FIG. 3), 4311 (FIG. 4), or 5311 (FIG. 5). In the same or a different example, the instruction pointer and the instruction step it relates to can be represented, adjacent to each other, on the on-product instruction guide. In the same or a different example, the interaction point, which can be similar to one of interaction points 1100 (FIG. 1) or 3100 (FIG. 3) or 5100 (fig. 5), is located on a physical location of the instruction-wielding apparatus, such as first physical location 1111 in FIG. 1.

Next, a step 9400 in FIG. 9 involves interacting with the interaction point on the instruction-wielding apparatus to complete the instruction step. After following the instruction pointer in step 9400, the user can be able to establish the relationship between the instruction step on the on-product instruction guide, and the interaction point on the instruction-wielding apparatus. The user, after having read any advice provided by the instruction step, can interact with the interaction point to execute the task he is trying to accomplish and complete the instruction step.

Although the invention has been described with reference to specific embodiments, it will be understood by those skilled in the art that various changes may be made without departing from the scope of the invention.

For example, the invention is not limited to a wireless network context, and need not serve as a wireless network user interface, but may find utility in any context in which a computer system or a similar system must be monitored and/or managed. Similarly, the content and arrangement of the various screen displays can vary widely from the particular embodiments shown in the figures yet still fall within the scope of the invention. Accordingly, the disclosure of embodiments of the invention is intended to be illustrative of the scope of the invention and is not intended to be limiting. It is intended that the scope of the invention shall be limited only to the extent required by the appended claims. For example, to one of ordinary skill in the art, it will be readily apparent that the methods discussed herein may be implemented in a variety of embodiments, and that the foregoing discussion of certain of these embodiments does not necessarily represent a complete description of all possible embodiments. As a specific example, in FIG. 7, step 7300 could occur before step 7200. Accordingly, the detailed description of the drawings, and the drawings themselves, disclose at least one preferred embodiment of the invention, and may disclose alternative embodiments of the invention.

All elements claimed in any particular claim are essential to the invention claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. An instruction-wielding apparatus, comprising:
two or more interaction points;
an instruction-holding mechanism; and
one or more on-product instruction cards, at least a first one of which comprises:
two or more instruction steps;
a first instruction pointer that, when the first one of the one or more on-product instruction cards is supported by the instruction-holding mechanism:
points to a first physical location of a first one of the two or more interaction points on the instruction-wielding apparatus; and
correlates the first physical location to a first one of the two or more instruction steps adjacent to the first instruction pointer;
and
a second instruction pointer that, when the first one of the one or more on-product instruction cards is supported by the instruction-holding mechanism:
points to a second physical location of a second one of the two or more interaction points on the instruction-wielding apparatus; and
correlates the second physical location to a second one of the two or more instruction steps adjacent to the second instruction pointer.

2. The instruction-wielding apparatus of claim 1, wherein:
the instruction-wielding apparatus is selected from the group consisting essentially of:
a network router;
a network switch;
a modem.

3. The instruction-wielding apparatus of any of the preceding claims,
wherein:
the two or more interaction points are selected from the group consisting essentially of:
a power plug;
a modem connection port;
a network element connection port; and
one or more status lights.

4. The instruction-wielding apparatus of any of the preceding claims,
wherein:
at least a portion of the instruction-holding mechanism is translucent.

5. The instruction-wielding apparatus of any of the preceding claims,
wherein:
the two or more instruction steps provide setup advice.

6. The instruction-wielding apparatus of any of the preceding claims,
wherein:
the two or more instruction steps provide troubleshooting advice.

7. The instruction-wielding apparatus of any of the preceding claims,
wherein:
a second one of the one or more on-product instruction cards provides instructions in a non-English language; and
the first one of the one or more on-product instruction cards provides the instructions in English.

8. The instruction-wielding apparatus of any of the preceding claims,
wherein:
each of the one or more on-product instruction cards provides the instructions in a different language.

9. The instruction-wielding apparatus of any of the preceding claims, further comprising:
one or more multi-card sheets removable from the instruction-wielding apparatus;
wherein each of the one or more on-product instruction cards are contained on the one or more multi-card sheets.

10. The instruction-wielding apparatus of any of the preceding claims, further comprising:
one or more accordion-folded multi-card sheets removable from the instruction-wielding apparatus;
wherein each of the one or more on-product instruction cards is presented on a different folded section of the one or more accordion-folded multi-card sheets.

11. The instruction-wielding apparatus of claim 1, 2, 3, 4, 5, 6, 7, 8, or 9, further comprising:
one or more accordion-folded multi-card sheets removable from the instruction-wielding apparatus;
wherein each of the one or more on-product instruction cards is presented in a different language on a different folded section of the one or more accordion-folded multi-card sheets.

12. The instruction-wielding apparatus of any of the preceding claims,
wherein:
the instruction-holding mechanism is a surface of the instruction-wielding apparatus; and
at least one of the one or more on-product instruction cards further comprises:
a sticker capable of adhering to the instruction-holding mechanism.

13. The instruction-wielding apparatus of claim 12, wherein:
the sticker is removable.

14. The instruction-wielding apparatus of any of the preceding claims,
wherein:
at least one of the one or more of the one or more on-product instruction cards comprises a booklet.

15. A method of presenting instructions on an instruction-wielding apparatus, the method comprising:
providing the instruction-wielding apparatus having two or more interaction points and an instruction-holding mechanism; and
providing one or more on-product instruction cards having two or more instruction steps and two or more instruction pointers;
presenting, when the first one of the one or more on-product instruction cards is supported by the instruction-holding mechanism:
a first one of the two or more instruction pointers:
pointing to a first physical location of a first one of the two or more interaction points on the instruction-wielding apparatus; and
correlating the first physical location to a first one of the two or more instruction steps adjacent to the first one of the two or more instruction pointers;
and
a second one of the two or more instruction pointers:
pointing to a second physical location of a second one of the two or more interaction points on the instruction-wielding apparatus; and
correlating the second physical location to a second one of the two or more instruction steps adjacent to the second one of the two or more instruction pointers.
